# EUROPÄISCHE PATENTSCHRIFT

(11) **EP 0 469 396 B1**
(45) Veröffentlichungstag und Bekanntmachung des Hinweises auf die Patenterteilung: **14.09.1994**
(21) Anmeldenummer: 91111994.9
(22) Anmeldetag: 18.07.1991
(51) Int. Cl.: F16D 3/32, F16D 3/50

(54) **Doppelkreuzgelenk mit Zentrierung**
Double universal joint with centering
Joint universel double avec centrage

(30) Priorität: 27.07.1990 GB 9016481
(43) Veröffentlichungstag der Anmeldung: 05.02.1992
(73) Patentinhaber: GKN Cardantec International Gesellschaft für Antriebstechnik mbH, D-45143 Essen (DE)
(72) Erfinder: Fisher, Les George, Stutton Coldfield, B742DD Birmingham (GB)
(74) Vertreter: Harwardt, Günther, Dipl.-Ing.

(56) Entgegenhaltungen:
- US-A- 2 953 001
- US-A- 3 016 721
- US-A- 3 429 144

## Beschreibung

Die Erfindung betrifft ein Doppelkreuzgelenk, bestehend aus zwei Kreuzgelenken mit jeweils einer ersten Gelenkgabel und einer beiden Kreuzgelenken gemeinsamen Doppelgabel, wobei jeweils die Gelenkgabeln eines Kreuzgelenkes mit der Doppelgabel unter Zwischenschaltung eines Gelenkkreuzes gelenkig verbunden sind und die beiden Gelenkgabeln über eine Abwinklung zulassende Zentriermittel verbunden sind und diese ein Kugelelement, das einer Gelenkgabel zugeordnet ist, und eine der anderen Gelenkgabeln zugeordnete Lagerung für das Kugelelement mit einer Verlängerung an der anderen Gelenkgabel in deren Ausnehmung das Kugelelement hineinragt, umfassen.

Bei einem solchen bekannten Doppelkreuzgelenk wird sichergestellt, daß das Gelenk zumindest in wesentlichen Arbeitsbereichen homokinetische Eigenschaften, also Gleichlaufeigenschaften, aufweist.

Es sind die verschiedensten Vorschläge für die Zentrierung bekannt. So greift zum Beispiel das Kugelelement in eine Ausnehmung einer Verlängerung der gegenüberliegenden Gelenkgabel ein und es ist auch eine Anordnung bekannt, bei der das Kugelelement in einer Pfanne gehalten ist. Entweder das Kugelelement oder die Pfanne müssen gegenüber der entsprechenden, sie haltenden Gelenkgabel axial beweglich sein, um den geometrischen Verhältnissen bei Gelenkbeugung gerecht zu werden. Eine solche Kugel- und Pfannenanordnung verleiht dem Gelenk jedoch nicht unter allen Bewegungs- und Beugungsverhältnissen Gleichlaufeigenschaften, sondern nur bei einem bestimmten Konstruktionswinkel, obgleich bei anderen Beugungswinkeln die Gelenkeigenschaften den Gleichlaufeigenschaften annähernd gleichkommen. Diese Art von Zentriermitteln ist aufwendig herzustellen, um eine große Fertigungsgenauigkeit erreichen und Spiel unterdrücken zu können. Darüberhinaus besteht auch eine Verschleißanfälligkeit, so daß sich auch während des Betriebes Spiel einstellt. Es sind auch Anordnungen bekannt, bei denen die Pfanne einer Axialkraft durch eine Feder unterliegt, um Spiel zu unterdrücken. Der Nachteil dieser Anordnung besteht jedoch darin, daß die Feder die Gelenkgabeln auseinander und damit das Gelenk in die gebeugte Stellung drängt. Ist das Gelenk nur unter einem kleinen Winkel gebeugt, wird eine sehr hohe Federkraft auf die Kugelpfanne ausgeübt.

Der Erfindung liegt die Aufgabe zugrunde, ein Doppelkreuzgelenk mit verbesserten Zentriereigenschaften zu schaffen, wobei selbst bei groben Fertigungstoleranzen ein enges Spiel zur Führung eingehalten werden kann und sich eventuell einstellendes Spiel während des Betriebes dauerhaft unterdrückt wird.

Diese Aufgabe wird erfindungsgemäß dadurch gelöst, daß beiderseits einer gedachten und den Mittelpunkt des Kugelelementes durchschneidenden Ebene jeweils ein Kugelpfannenteil, welche über Federmittel gegeneinander, sich an die Außenfläche des Kugelelementes anlegend verspannt sind, angeordnet sind und daß die Kugelpfannenteile in der Ausnehmung der Verlängerung der zugehörigen Gelenkgabel zentriert sind.

Außerdem ist vorgesehen, daß die beiden Kugelpfannenteile von einem Käfig gehalten sind, daß eines der Kugelpfannenteile fest und das andere Kugelpfannenteil dazu verstellbar am Käfig gehalten ist und daß die Federmittel zwischen dem Käfig und dem verstellbaren Kugelpfannenteil wirksam sind. Hierdurch wird gewährleistet, daß eine Baueinheit geschaffen wird, die über das Kugelelement axial zentriert gehalten wird.

Durch diese Anordnung der Federn wird verhindert, daß auf die Gelenkanordnung eine Kraft im Sinne des Abbeugens des Gelenkes ausgeübt wird. Darüberhinaus wird auch Spielfreiheit bei gestrecktem Gelenk erreicht. Schließlich wird gewährleistet, daß auch im Betrieb sich einstellender Verschleiß nicht zu Spiel führt. Damit wird auch ein negativer Einfluß auf die Führungsgenauigkeit der beiden Kreuzgelenke einander gegenüber ausgeschlossen.

Bevorzugt sind die Kugelpfannenteile in der Ausnehmung der Verlängerung verschiebbar geführt. Das Kugelelement ist vorzugsweise auf einem Zapfen der zugehörigen Gelenkgabel angeordnet. Infolge der verschiebbaren Anordnung der Kugelpfannenteile kann das Kugelelement ortsfest und zwar an der zugehörigen Gelenkgabel oder aber an dem Zapfen festgelegt werden. Die Ausnehmung, in der die Kugelpfannenteile geführt sind, ist vorzugsweise zylindrisch ausgebildet. Die einzelnen Kugelpfannenteile können aus Ringen gebildet werden oder aber aus mehreren Kugelpfannensegmenten bestehen.

Insbesondere dann, wenn mehrere einzelne Kugelpfannensegmente vorhanden sind, ist zur weiteren Ausgestaltung der Erfindung vorgeschlagen, daß der Käfig ein quer zur Achse der Ausnehmung verlaufendes Bauteil und parallel zur Achse verlaufende Schenkel aufweist, von denen das verstellbare Kugelpfannenteil geführt gehalten und an denen das andere Kugelpfannenteil befestigt ist.

Für den Fall, daß mehrere Kugelpfannensegmente vorhanden sind, sind diese jeweils einem Schenkel zugeordnet.

Eine besonders günstige Abstützung und Spielunterdrückung ergibt sich durch, daß das Basisteil von einem Bund mit einer geneigten Anlagefläche die zusammen mit einer radialen Endfläche des ersten Kugelpfannenteiles oder dessen Kugelpfannensegmenten einem bezüglich der Achse radial nach außen sich verjüngenden Keilspalt bildet in dem ein für ein radial federndes Federmittel abgestützt ist.

Hierdurch wird erreicht, daß für die Verspannung nur geringe Federkräfte benötigt werden. Kommt aufgrund der Betriebsbedingung zwischen den Pfannenteilen und dem Kugelelement Spiel auf, so wird dieses von den Federelementen beseitigt und zwar dann, wenn die Betriebsbedingungen des Gelenkes dies zulassen.

Bevorzugt wird nach der Erfindung die Neigung so festgelegt, daß Sie unter Berücksichtigung der radial nach außen wirkenden Spannkraft der Federmittel einer Rückstellung des verstellbaren Kugelpfannenteiles oder dessen Kugelpfannensegmenten entgegensteht. Vorzugsweise ist als Federmittel ein Federring vorgesehen.

Durch die axiale Verstellung der Pfannenteile einander gegenüber wird neben der Spielunterdrückung in axialer Richtung bezüglich des Kugelelementes auch noch eine Spielunterdrückung in radialer Richtung zwischen dem Kugelelement und der zylindrischen Innenfläche der Verlängerung der zugehörigen Gelenkgabel vorgenommen.

Weiter ist von Vorteil, bei dieser Anordnung, daß nur geringe Federkräfte erforderlich sind. Hierdurch wird erreicht, daß die Zentriervorrichtung keinen hohen Belastungen unterworfen ist und daher auch nur geringere Verluste infolge einer geringeren Wärmeentwicklung im Betrieb eintritt.
Ein bevorzugtes Ausführungsbeispiel der Erfindung ist in der Zeichnung schematisch dargestellt und anhand dieser beschrieben.

Es zeigt
- Figur 1: einen Längsschnitt durch ein erfindungsgemäßes Doppelkreuzgelenk, bei dem der Übersicht halber einige Teile ausgelassen sind.
- Figur 2: ist ein Längsschnitt durch das Gelenk in einer Ebene, die im rechten Winkel zu dem in Fig. 1 gezeigten Schnitt verläuft.
- Figur 3: zeigt einen Teil des Gelenkes gemäß Fig. 1 in gebeugtem Zustand.
- Figur 4: zeigt eine Vergrößerung der Zentriermittel des Gelenks.

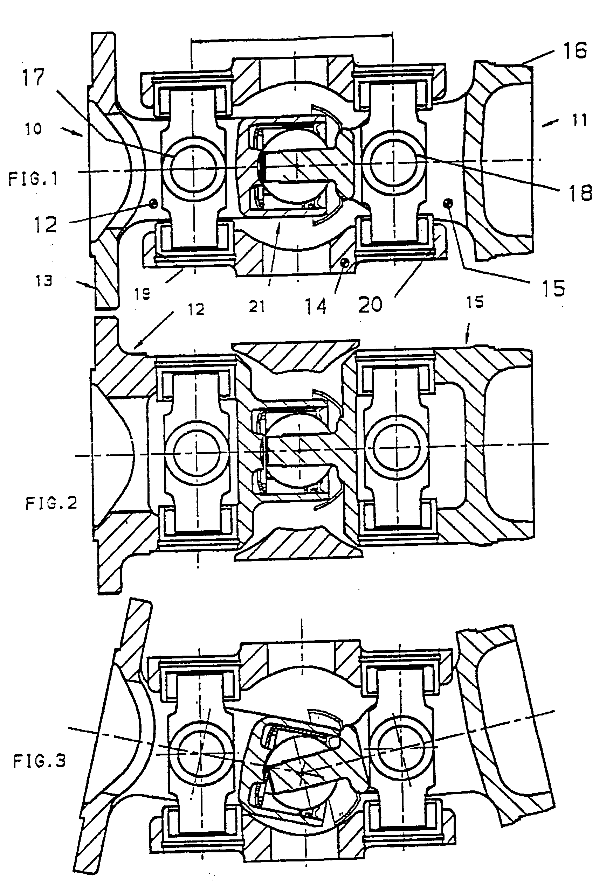

Das in Figur 1 gezeigte Doppelkreuzgelenk weist zwei einzelne Kreuzgelenke 10, 11 auf. Das Gelenk 10 besitzt eine erste Gelenkgabel 12 mit einem eine Verbindung, insbesondere durch Schrauben, mit einem Antriebselement ermöglichenden Flansch 13. Es besitzt ferner eine zweite Gelenkgabel 14, die gleichzeitig eine Gelenkgabel des Gelenkes 11 darstellt, das heißt, als Doppelgabel ausgebildet ist. Die andere Gelenkgabel 15 des Gelenkes 11 weist einen eine Schweißverbindung mit einem Antriebswellenelement ermöglichenden Zapfen 16 auf. Es versteht sich und es ist bekannt, daß die beiden Kreuzgelenke 10, 11 auch mit entsprechenden, ihre Gelenkgabeln 12, 14 bzw. 14, 15 verbindenden Gelenkkreuzen versehen sind, die nicht in der Zeichnung dargestellt sind. Deutlich sichtbar sind jedoch die als Bohrungen gestalteten Öffnungen 17, 18 in den Gelenkgabeln 12, 15, und die Bohrungen bzw. Öffnungen 19, 20 in der Gelenkgabel 14, in denen die die entsprechenden Zapfen der Gelenkkreuze schwenkbar lagernden Lagerbüchsen aufgenommen werden.

Die beiden in einem Abstand voneinander angeordneten Gelenkgabeln 12, 15 erstrecken sich über die Gelenkkreuze hinaus aufeinander zu. Im Gelenkmittelpunkt werden sie durch Zentriermittel 21 miteinander verbunden, wodurch sichergestellt wird, daß, wenn das Gelenk als Ganzes gebeugt wird, die beiden Einzelgelenke 10, 11 jeweils unter gleichen Winkeln oder im wesentlichen unter gleichen Winkeln gebeugt werden. Hierdurch wieder ist gewährleistet, daß das Gelenk als Ganzes Gleichlaufeigenschaften oder im wesentlichen Gleichlaufeigenschaften aufweist. In der Praxis werden tatsächlich Gleichlaufeigenschaften nur unter einem bestimmten Konstruktionsbeugungswinkel des gesamten Gelenks erzielt, während das Gelenk unter anderen Beugungswinkeln keine echten Gleichlaufeigenschaften aufweist. Doch unter den im Betrieb am wahrscheinlichsten auftretenden Beugungswinkeln reichen die Gleichlaufeigenschften des Gelenks aus. Figur 3 zeigt die beiden Gelenkgabeln 12, 15 bei gebeugtem Gelenk, wobei die Gelenkgabeln im Vergleich zu der gemeinsamen Gelenkgabel 14 unter gleichen Winkeln gebeugt sind.

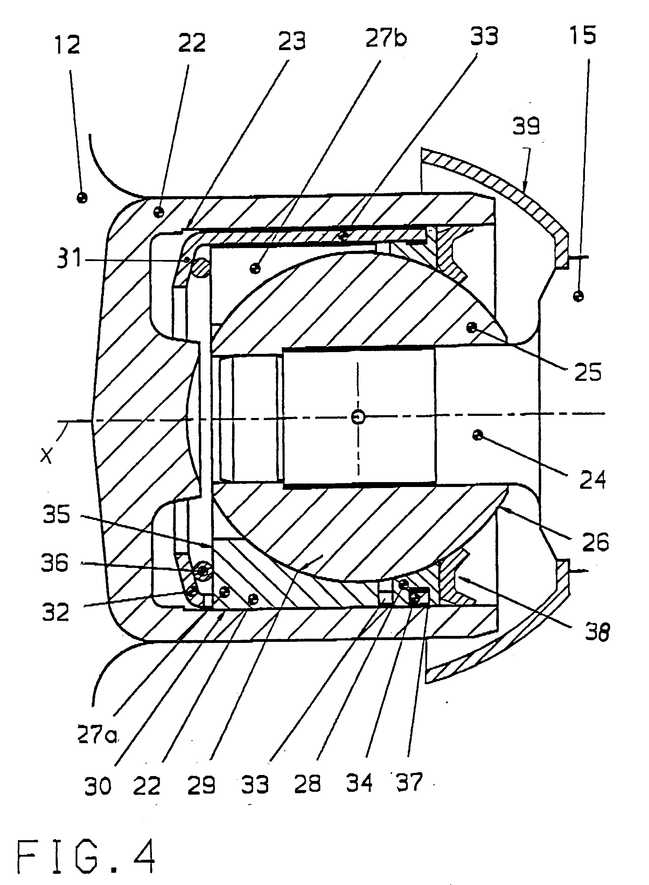

Die in Fig. 1 ganz allgemein dargestellten Zentriermittel 21 sind in Fig. 4 in detaillierterer Form gezeigt. Die Gelenkgabel 12 des Gelenks 10 weist eine Verlängerung 22 auf, die schalenförmig ausgebildet ist und eine Ausnehmung mit einer zylindrischen Innenfläche 23 aufweist. Die Gelenkgabel 15 ist mit einem Zapfen 24 versehen, auf dem ein Kugelelement 25 mit einer teilkugeligen Außenfläche 26 befestigt ist. In einem axialen Abstand voneinander (entlang der Drehachse der Gelenkgabel 12) auf gegenüberliegenden Seiten der den Mittelpunkt durchschneidenden Teilungsebene des Kugelelementes 25 sind Pfannenteile, nämlich ein erstes Kugelpfannenteil 27 und ein zweites Kugelpfannenteil 28 angeordnet. Deren Innenflächen sind der Außenfläche 26 des Kugelelementes 25 angepaßt. Das erste Kugelpfannenteil 27 besteht aus drei um das Kugelelement 25 umfangsverteilt angeordneten Kugelpfannensegmenten 27a, 27b, von denen in der Zeichnungsfigur 4 nur zwei zu sehen sind. Diese weisen die zu der Außenfläche 26 des Kugelelementes 25 komplementär ausgebildeten teilkugeligen Innenflächen 29 und zu der zylindrischen Innenfläche 23 der schalenförmigen Verlängerung 22 der Gelenkgabel 12 komplementär ausgebildete teilzylindrische Außenflächen 30 auf. Bei dem Kugelpfannenteil 28 kann es sich um einen Ring oder auch um einzelne Segmente handeln.

Die das Pfannenteil 27 darstellenden Segmente 27a, 27b werden von einem Blechkäfig 31 gehalten, der einen Bund 32 aufweist. Ferner besitzt er drei Schenkel 33, die sich axial erstrecken und in einer Nut der Kugelpfannensegmente 27a, 27b des ersten Kugelpfannenteiles 27 eingreifen. Die Schenkel 33 enden an ihren dem Bund 32 abgewandten Enden in Kopfelementen 34. Die Kopfelemente 34 greifen in eine quer zu den Schenkeln 33 verlaufende Nut 37 des zweiten Kugelpfannenteiles 28 ein und halten dieses gegenüber dem Bund 32 ortsfest. Zwischen dem Bund 32 und der diesem zugewandten Endflächen 35 der Kugelpfannensegmente 27a, 27b des ersten Kugelpfannenteiles 27 ist ein radial federnder Federring 36 angeordnet. Der Bund 32 verläuft geneigt, so daß der Federring 36 in dem Maße, wie er sich federnd aufweitet, die Kugelpfannensegmente 27a, 27b des ersten Kugelpfannenteils 27 von dem Bund 32 weg in Richtung auf das zweite Kugelpfannenteil 28 drängt. Die Kugelpfannensegmente 27a, 27b des ersten Kugelpfannenteils 27 werden in Anlage zum Kugelelement 25 und der Innenfläche 23 der Verlängerung 22 gedrängt, wodurch das Spiel zwischen diesen Teilen eliminiert wird. Der Neigungswinkel des Bundes 32 wird so gewählt, daß die Kugelpfannensegmente 27a, 27b des ersten Kugelpfannenteils 27 sich nicht zurück bewegen können.

Es ist aufgrund der Selbsthemmung verhindert, daß dann, wenn der Federring 36 als Folge seiner Aufweitung das Spiel eliminiert hat, ein erneutes Spiel im Betrieb auftreten kann.

An dem offenen Ende der schalenförmigen Verlängerung 21 ist eine Dichtung 38 vorgesehen, die an der Innenfläche 23 und der Außenfläche 26 des Kugelelementes 25 anliegt. Die Dichtung 38 ist an dem zweiten Kugelpfannenteil 28 befestigt und sorgt dafür, daß das Schmiermittel in der Zentrieranordnung verbleibt. Eine an der Gelenkgabel 15 angebrachte Abschirmung 39 verhindert, daß Verschleiß verursachender Schmutz in den Bereich der Dichtung 38 gelangt. Die Dichtungsanordnung ist insofern vorteilhaft, als sie ihre Wirkung zwischen Flächen ausübt, deren relative Orientierung und deren relativer Abstand voneinander sich im Betrieb nicht ändern.

Wenn das Gelenk im Betrieb gebeugt wird, gleiten die Zentriermittel axial innerhalb der schalenförmigen Verlängerung 22 der Gelenkgabel 12 entlang der Achse X. Die Kugelpfannensegmente 27a, 27b des ersten Kugelpfannenteiles 27 und das zweite Kugelpfannenteil 28 gleiten entlang der zylindrischen Innenfläche 23 der Verlängerung 22. Die Keilwirkung des Federrings 36 gegenüber dem geneigten Bund 27 beseitigt das Spiel und verhindert, daß es im Betrieb wieder auftreten kann, ohne daß ein extrem starker Federring 30 erforderlich wäre.

Es versteht sich, daß alternative Arten und Anordnungen von Federmitteln zur Spielbeseitigung in den Zentriermitteln verwendet werden können. Insbesondere könnten, um den Umfang der Zentriermittel wirkende Federmittel, die mit entsprechend angeordneten geneigten Flächen zusammenarbeiten, anstelle des oben beschriebenen, radial wirkenden Federringes eingesetzt werden.

### Bezugszeichenliste

- 10, 11: Kreuzgelenke
- 12: Gelenkgabel
- 13: Flansch
- 14: Gelenkgabel
- 15: Gelenkgabel
- 16: Zapfen
- 17-20: Öffnungen in den Gelenkgabeln
- 21: Zentriermittel
- 22: Verlängerung
- 23: Ausnehmung/zylindrische Innenfläche
- 24: Zapfen
- 25: Kugelelement
- 26: teilkugelige Außenfläche
- 27: erste Kugelpfannenteile
- 27a,27b: Kugelpfannensegmente
- 28: zweiten Kugelpfannenteile
- 29: Innenfläche der Kugelpfannensegmente
- 30: teilzylindrische Außenfläche der Kugelpfannensegmente
- 31: Käfig
- 32: Bund
- 33: Schenkel
- 34: Kopfelemente
- 35: Endfläche
- 36: Federring
- 37: Nut
- 38: Dichtung
- 39: Abschirmung
- X: Achse

## Patentansprüche

1. Doppelkreuzgelenk, bestehend aus zwei Kreuzgelenken (10, 11) mit jeweils einer ersten Gelenkgabel (12, 15) und einer beiden Kreuzgelenken (10, 11) gemeinsamen Doppelgabel (14), wobei jeweils die Gelenkgabeln (12, 15) eines Kreuzgelenkes (10, 11) mit der Doppelgabel (14) unter Zwischenschaltung eines Gelenkkreuzes gelenkig verbunden sind und die beiden Gelenkgabeln (12, 15) über eine Abwinklung zulassende Zentriermittel verbunden sind und diese ein Kugelelement (25), das einer Gelenkgabel (15) zugeordnet ist, und eine der anderen Gelenkgabel (12) zugeordnete Lagerung für das Kugelelement (25) mit einer Verlängerung (22) an der anderen Gelenkgabel (12) in deren Ausnehmung (23) das Kugelelement (25) hineinragt, umfassen,
dadurch gekennzeichnet,
daß beiderseits einer gedachten und den Mittelpunkt des Kugelelementes (25) durchschneidenden Ebene jeweils ein Kugelpfannenteil (27, 28), welche über Federmittel gegeneinander, sich an die Außenfläche (26) des Kugelelementes (25) anlegend verspannt sind, angeordnet sind, und daß die Kugelpfannenteile (27, 28) in der Ausnehmung (23) der Verlängerung (22) der zugehörigen Gelenkgabel (12) zentriert sind,
daß die beiden Kugelpfannenteile (27, 28) von einem Käfig (31) gehalten sind, daß eines der Kugelpfannenteile (28) fest und das andere Kugelpfannenteil (27) dazu verstellbar am Käfig (31) gehalten ist und daß die Federmittel (36) zwischen dem Käfig (31) und dem verstellbaren Kugelpfannenteil (27) wirksam sind.

2. Doppelkreuzgelenk nach Anspruch 1,
dadurch gekennzeichnet,
daß die Kugelpfannenteile (27, 28) in der Ausnehmung (23) der Verlängerung (22) verschiebbar geführt sind.

3. Doppelkreuzgelenk nach einem der Ansprüche 1 oder 2,
dadurch gekennzeichnet,
daß das Kugelelement (25) auf einem Zapfen (24) der zugehörigen Gelenkgabel (15) angeordnet ist.

4. Doppelkreuzgelenk nach einem der Ansprüche 2 oder 3,
dadurch gekennzeichnet,
daß das Kugelelement (25) ortsfest an der zugehörigen Gelenkgabel (15) angebracht ist.

5. Doppelkreuzgelenk nach Anspruch 2,
dadurch gekennzeichnet,
daß die Innenfläche (23) der Ausnehmung zylindrisch ausgebildet ist.

6. Doppelkreuzgelenk nach einem oder mehreren der Ansprüche 1 bis 5,
dadurch gekennzeichnet,
daß zumindest eines der beiden Kugelpfannenteile (27) aus mehreren Kugelpfannensegmenten (27a, 27b) besteht.

7. Doppelkreuzgelenk nach Anspruch 1,
dadurch gekennzeichnet,
daß der Käfig (31) ein quer zur Achse (X) der Ausnehmung (23) verlaufendes Bauteil (32) und parallel zur Achse verlaufende Schenkel (33) aufweist, von denen das verstellbare Kugelpfannenteil (27) geführt gehalten und an denen das andere Kugelpfannenteil (28) befestigt ist.

8. Doppelkreuzgelenk nach den Ansprüchen 6 und 7,
dadurch gekennzeichnet,
daß je Kugelpfannensegment (27a, 27b) ein Schenkel (33) vorhanden ist.

9. Doppelkreuzgelenk nach einem der Ansprüche 7 oder 8,
dadurch gekennzeichnet,
daß das Basisteil von einem Bund (32) mit einer geneigten Anlagefläche zusammen mit einer radialen Endfläche (35) des ersten Kugelpfannenteiles (27) oder dessen Kugelpfannensegmenten (27a, 27b) einem bezüglich der Achse (X) radial nach außen sich verjüngenden Keilspalt bildet in dem ein radial federndes Federmittel (36) abgestützt ist.

10. Doppelkreuzgelenk nach Anspruch 9,
dadurch gekennzeichnet,
daß die Neigung so festgelegt ist, daß sie unter Berücksichtigung der radial nach außen wirkenden Spannkraft der Federmittel (36) einer Rückstellung des verstellbaren ersten Kugelpfannenteiles (27) oder dessen Kugelpfannensegmenten (27a, 27b) entgegensteht.

11. Doppelkreuzgelenk nach einem oder mehreren der Ansprüche 1 bis 10,
dadurch gekennzeichnet,
daß als Federmittel ein Federring (36) vorgesehen ist.

## Claims

1. A double universal joint consisting of two universal joints (10, 11) with a first joint yoke (12, 15) associated with each universal joint (10, 11) and with a double yoke (14) common to both said universal joints, the joint yokes (12, 15) of the universal joints (10, 11) being connected to the double yoke (14) so as to be capable of articulation, with a cross member being connected therebetween, and the two joint yokes (12, 15) being connected by centring means permitting articulation and comprising a ball element (25) associated with one joint yoke (15) and a bearing for the ball element (25) associated with the other joint yoke (12) which comprises an extension (22), with the ball element (25) extending into the recess (23) thereof,
characterised in
that on each side of an imaginary plane intersecting the centre of the ball element (25) there is arranged a ball cup part (27, 28), which two parts are tensioned relative to one another by spring means and rest against the outer face (26) of the ball element (25); that the ball cup parts (27, 28) are centred in the recess (23) of the extension (22) of the associated joint yoke (12); that the two ball cup parts (27, 28) are held by a cage (31); that one of the ball cup parts (28) is held rigidly on the cage (31) and that the other ball cup part (27) is held adjustably relative to the first ball cup part (28); and that the spring means (36) operate between the cage (31) and the adjustable ball cup part (27).

2. A double universal joint according to claim 1, characterised in
that the ball cup parts (27, 28) are movably guided in the recess (23) of the extension (22).

3. A double universal joint according to any one of claims 1 or 2,
characterised in
that the ball element (25) is arranged on a journal (24) of the associated joint yoke (15).

4. A double universal joint according to any one of claims 2 or 3,
characterised in
that the ball element (25) is non-adjustably attached to the associated joint yoke (15).

5. A double universal joint according to claim 2, characterised in
that the inner face (23) of the recess is cylindrical.

6. A double universal joint according to any one or several of claims 1 to 5,
characterised in
that at least one of the two ball cup parts (27) consists of several ball cup segments (27a, 27b).

7. A double universal joint according to claim 1,
characterised in
that the cage (31) comprises a component (32) extending transversely to the axis (X) of the recess (23) and arms (33) extending parallel to the axis, by means of which the adjustable ball cup part (27) is held and guided and to which the other cup part (28) is secured.

8. A double universal joint according to claims 6 and 7,
characterised in
that an arm (33) is provided for each ball cup segment (27a, 27b).

9. A double universal joint according to any one of claims 7 or 8,
characterised in
that the base of a collar (32) with an inclined contact face, together with a radial end face (35) of the first ball cup part (27) or its ball cup segments (27a, 27b), forms a wedge-shaped gap which, with reference to the axis (X), is tapered radially outwardly and in which there are supported radially resilient spring means (36).

10. A double universal joint according to claim 9,
characterised in
that the angle of inclination is such that, taking into account the radially outwardly effective tensioning force of the spring means (36), it acts against a return movement of the adjustable first ball cup part (27) or its ball cup segments (27a, 27b).

11. A double universal joint according to any one or several of claims 1 to 10,
characterised in
that a spring ring (36) constitutes the spring means.

## Revendications

1. Joint universel double, constitué de deux joints à croisillon (10, 11) comprenant chacun une première fourchette de joint, (12, 15) et une fourchette double (14) commune aux deux joints à croisillon (10, 11), les fourchettes de joint (12, 15) d'un joint à croisillon (10, 11) étant chacune reliée de façon articulée à la fourchette double (14) avec interposition d'un croisillon de joint, et les deux fourchettes de joint (12, 15) étant reliées par l'intermédiaire de moyens de centrage qui permettent la formation d'un angle, lesdits moyens de centrage comprenant un élément sphérique (25), qui est associé à l'une des fourchettes de joint (15), et un système de montage pour l'élément sphérique (25), associé à l'autre fourchette de joint (12), avec un prolongement (22) sur l'autre fourchette de joint (12), dans l'évidement (23) duquel pénètre l'élément sphérique (25),
caractérisé en ce que des deux côtés d'un plan imaginaire qui passe par le centre de l'élément sphérique (25) sont agencées respectivement des parties formant platine (27, 28) pour l'élément sphérique, lesdites parties formant platine étant serrées l'une contre l'autre par des moyens formant ressort, en s'appuyant sur la surface extérieure (26) de l'élément sphérique (25),
en ce que les parties formant platine (27, 28) sont centrées dans l'évidement (23) du prolongement (22) de la fourchette de joint associée (12),
en ce que les deux parties formant platine (27, 28) sont retenues par une cage (31),
en ce que l'une des parties formant platine (28) est retenue fermement sur la cage et l'autre partie formant platine (27) est retenue sur la cage (31) de manière à pouvoir être déplacée par rapport à la première,
et en ce que les moyens formant ressort (36) agissent entre la cage (31) et la partie formant platine mobile (27).

2. Joint universel double selon la revendication 1, caractérisé en ce que les parties formant platine (27, 28) sont guidées en déplacement dans l'évidement (23) du prolongement (22).

3. Joint universel double selon l'une ou l'autre des revendications 1 et 2, caractérisé en ce que l'élément sphérique (25) est agencé sur un tenon (24) de la fourchette de joint associée (15).

4. Joint universel double selon l'une ou l'autre des revendications 2 et 3, caractérisé en ce que l'élément sphérique (25) est monté fixe en position sur la fourchette de joint associée (15).

5. Joint universel double selon la revendication 2, caractérisé en ce que la surface intérieure (23) de l'évidement est réalisée de manière cylindrique.

6. Joint universel double selon l'une ou plusieurs des revendications 1 à 5, caractérisé en ce que l'une au moins des deux parties formant platine (27) est constituée de plusieurs segments de platine (27a, 27b).

7. Joint universel double selon la revendication 1, caractérisé en ce que la cage (31) comporte un composant (32) qui s'étend perpendiculairement à l'axe (X) de l'évidement (23), et un bras (33) qui s'étend parallèlement à l'axe, par lequel la partie mobile formant platine (27) est retenue en étant guidée, et sur lequel est fixée l'autre partie formant platine (28).

8. Joint universel double selon les revendications 6 et 7, caractérisé en ce qu'il est prévu un bras (33) par segment de platine (27a, 27b).

9. Joint universel double selon l'une ou l'autre des revendications 7 et 8, caractérisé en ce que la pièce de base d'une collerette (32) avec une surface d'appui inclinée, forme ensemble avec une surface d'extrémité radiale (35) de la première partie formant platine (27), ou de ses segments de platine (27a, 27b), une fente en coin qui se rétrécit radialement en direction de l'extérieur par rapport à l'axe (X), et dans laquelle s'appuie un organe formant ressort (36) qui agit radialement.

10. Joint universel double selon la revendication 9, caractérisé en ce que l'inclinaison est fixée de telle manière qu'elle s'oppose, en tenant compte de la force de sollicitation de l'organe formant ressort (36) agissant radialement vers l'extérieur, à un retour de la première partie mobile formant platine (27) ou de ses segments de platine (27a, 27b).

11. Joint universel double selon l'une ou plusieurs des revendications 1 à 10, caractérisé en ce que l'on prévoit un anneau élastique (36) en tant qu'organe formant ressort.
